(19) Europäisches Patentamt
European Patent Office
Office européen des brevets

(11) Veröffentlichungsnummer: **0 385 392 A1**

# (12) EUROPÄISCHE PATENTANMELDUNG

(21) Anmeldenummer: **90103791.1**

(51) Int. Cl.5 **C09B 62/503, D06P 1/384**

(22) Anmeldetag: **27.02.90**

(30) Priorität: **01.03.89 DE 3906353**

(43) Veröffentlichungstag der Anmeldung:
**05.09.90 Patentblatt 90/36**

(84) Benannte Vertragsstaaten:
**BE CH DE ES FR GB IT LI**

(71) Anmelder: **HOECHST AKTIENGESELLSCHAFT**
**Postfach 80 03 20**
**D-6230 Frankfurt am Main 80(DE)**

(72) Erfinder: **Büch, Holger Michael, Dr.**
**Neugasse 4**
**D-6238 Hofheim am Taunus(DE)**
Erfinder: **Geisenberger, Josef, Dr.**
**Breslauer Strasse 57**
**D-6233 Kelkheim(DE)**
Erfinder: **Springer, Hartmut, Dr.**
**Am Erdbeerstein 27**
**D-6240 Königstein(DE)**

## (54) Wasserlösliche faserreaktive Farbstoffe, Verfahren zu ihrer Herstellung und ihre Verwendung.

(57) Anthrachinon-, Phthalocyanin-, Formazan-, Azomethin-, Dioxazin-, Phenazin-, Triphenylmethan-, Xanthen-, Thioxanthon-, Nitroaryl-, Naphthochinon-, Pyrenchinon- und Perylentetracarbimid-Farbstoffe, die eine oder zwei Gruppen der allgemeinen Formel

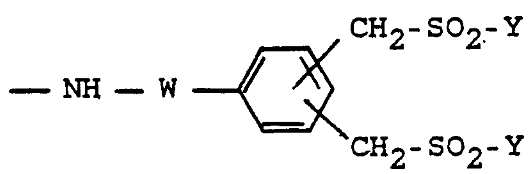

gebunden enthalten, in welcher Y die Vinylgruppe bedeutet oder eine Ethylgruppe ist, die in ß-Stellung einen Substituenten, der mittels Alkali unter Bildung der Vinylgruppe eliminierbar ist, enthält, und W eine direkte Bindung bedeutet oder eine Gruppe der allgemeinen Formel

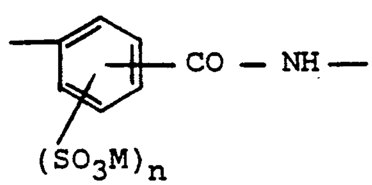

darstellt, in welcher M ein Wasserstoffatom oder ein Alkalimetall ist und n für die Zahl Null, 1 oder 2 steht. Die Farbstoffe besitzen sehr gute faserreaktive Eigenschaften und sind vorteilhaft zum Färben von carbonamidgruppen- und/oder hydroxygruppenhaltigem Material, wie beispielsweise Wolle und insbesondere Cellulosefasermaterialien, geeignet; sie färben diese Materialien in farbstarken echten Tönen mit hohem Fixiergrad.

EP 0 385 392 A1

## Wasserlösliche faserreaktive Farbstoffe, Verfahren zu ihrer Herstellung und ihre Verwendung

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, die verbesserte Eigenschaften besitzen und nicht nur Färbungen und Drucke mit guten Naß-und Lichtechtheiten liefern, sondern sich auch besonders für das Färben von cellulosehaltigen Fasermaterialien nach den Ausziehverfahren und den Klotz-Verfahren eignen.

Mit der vorliegenden Erfindung wurden nunmehr solche Farbstoffe mit den genannten guten Eigenschaften gefunden; die erfindungsgemäßen Farbstoffe entsprechen der allgemeinen Formel (1)

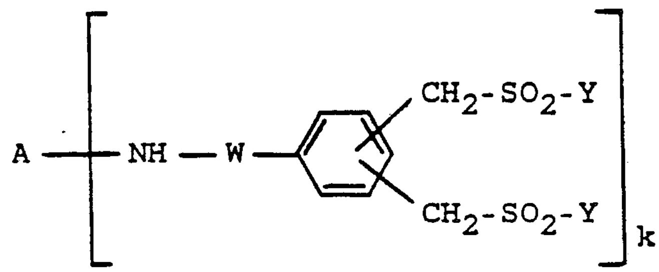

(1)

in welcher bedeuten

A ist der Rest eines Anthrachinon-, Phthalocyanin-, Formazan-, Azomethin-, Dioxazin-, Phenazin-, Triphenylmethan-, Xanthen-, Thioxanthon-, Nitroaryl-, Naphthochinon-, Pyrenchinon- oder Perylentetracarbimid-Farbstoffes;

W ist eine direkte Bindung oder eine Gruppe der allgemeinen Formel (2)

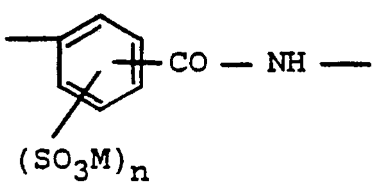

(2)

in welcher

M ein Wasserstoffatom oder ein Alkalimetall, wie Natrium, Kalium oder Lithium, bedeutet und

n für die Zahl Null, 1 oder 2 steht (wobei diese Gruppe im Falle von n gleich Null Wasserstoff bedeutet) und die Carbonylamidgruppe bevorzugt in meta- oder para-Stellung zur freien Bindung, die mit der Aminogruppe -NH- verbunden ist, an den Benzolkern gebunden ist;

Y ist die Vinylgruppe oder ist die Ethylgruppe, die in ß-Stellung durch einen Substituenten substituiert ist, der mittels Alkali unter Bildung der Vinylgruppe eliminierbar ist, wie beispielsweise die ß-Sulfatoethyl-, die ß-Thiosulfatoethyl-, die ß-Phosphatoethyl- oder eine ß-Halogenethyl-Gruppe, wie die ß-Bromethyl- und ß-chlorethyl-Gruppe, oder eine ß-Acyloxyethyl-Gruppe mit dem Acylrest einer aliphatischen oder aromatischen Carbonsäure oder Sulfonsäure, wie beispielsweise ein ß-Alkanoyloxyethyl-Rest, wie hiervon die ß-Acetyloxyethyl-Gruppe, oder die ß-Benzoyloxyethyl-, ß-Sulfobenzoyloxyethyl- oder ß-(p-Toluolsulfonyloxy)-ethyl-Gruppe;

k ist die Zahl 1 oder 2 (wobei im Falle k gleich 2 die beiden Gruppen voneinander verschieden sein können, bevorzugt jedoch gleich sind).

Bevorzugt ist A der Rest eines Anthrachinon-, Phthalocyanin-, Triphendioxazin- oder Formazanfarbstoffes, und bevorzugt ist Y die Vinylgruppe oder die ß-Chlorethyl-Gruppe oder insbesondere bevorzugt die ß-Sulfatoethyl-Gruppe.

Der Rest A kann in seinem Grundgerüst die bei organischen Farbstoffen üblichen Substituenten gebunden enthalten, wie beispielsweise Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Acylaminogruppen von 2 bis 8 C-Atomen, wie die Acetylamino-, Propionylamino- oder Benzoylaminogruppe; primäre und mono- oder disubstituierte Aminogruppen, wie Alkylaminogruppen und

Dialkylaminogruppen mit 1 bis 4 C-Atomen im Alkylrest, wobei die Alkylreste noch substituiert sein können, beispielsweise durch Phenyl, Sulfophenyl, Hydroxy, Sulfato, Sulfo und Carboxy, so beispielsweise Methylamino-, Ethylamino-, Propylamino-, Isopropylamino-, Butylamino-, N,N-Di-(ß-hydroxyethyl)-amino-, N,N-Di-(ß-sulfatoethyl)-amino-, Sulfobenzylamino-, N,N-Di-(sulfobenzyl)-amino- und Diethylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, wie beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkylsulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethyl-sulfamoyl, N-Propyl-sulfamoyl, N-Isopropyl-sulfamoyl, N-Butyl-sulfamoyl, N-(ß-Hydroxyethyl)-sulfamoyl und N,N-Di-(ß-hydroxyethyl)-sulfamoyl; N-Phenyl-sulfamoyl-, Ureido-, Hydroxy-, Carboxy-, Sulfomethyl- und Sulfogruppen.

Vorzugsweise ist der Farbstoffrest A durch eine oder mehrere, wie 2 bis 4, Sulfogruppen substituiert und weiterhin bevorzugt durch Substituenten, die aus der Gruppe Methyl, Ethyl, Methoxy, Ethoxy, Acetylamino, Benzoylamino, Amino, Chlor, Brom, Ureido, Hydroxy, Carboxy und Sulfomethyl ausgewählt sind.

Der Farbstoffrest A kann auch andere, aus der Literatur bekannte faserreaktive Gruppen besitzen, die nicht der Konstitution der allgemeinen Formel (3)

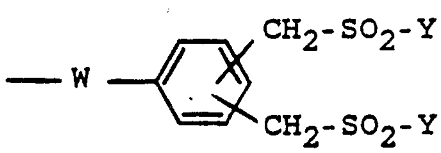

(3)

in welcher W und Y die obengenannten Bedeutungen haben, entsprechen. Solche bekannten faserreaktiven Gruppen sind beispielsweise eine Gruppe der Vinylsulfonreihe, wie eine Gruppe der Formel $-SO_2-Y$ mit Y der obigen Bedeutung, die über einen Alkylenrest, wie eine Methylengruppe, oder über eine Methylamino- oder Ethylaminogruppe an A gebunden sein kann, oder ein niedrigmolekularer, durch ein abspaltbares Atom oder eine abspaltbare Gruppe substituierter Alkanoylaminorest, ein niedrigmolekularer, gegebenenfalls durch ein abspaltbares Atom oder eine abspaltbare Gruppe substituierter Alkenoylamino- oder Alkensulfonylamino-Rest oder ein durch ein abspaltbares Atom oder eine abspaltbare Gruppe substituierter carbocyclischer, carbocyclisch-heterocyclischer oder heterocyclischer Rest, die über eine Carbonylamino- oder Sulfonylamino-Gruppe an den Rest A gebunden sind, wobei die heterocyclischen Anteile dieser Reste vier-, fünf- oder sechs-gliedrig sind, oder ein über eine Amino-, Methylamino- oder Ethylamino-Gruppe an den Rest A gebundener, durch ein abspaltbares Atom oder eine abspaltbare Gruppe substituierter Triazinyl- oder Pyrimidinyl-Rest. Solche Reste sind beispielsweise ein über eine Amino-, Methylamino- oder Ethylamino-Gruppe gebundener halogensubstituierter sechsgliedriger heterocyclischer Rest, wie beispielsweise ein Halogentriazinyl- oder Halogenpyrimidinyl-Rest, oder sind aliphatische Acylaminoreste, wie ein Halogenacetylamino-oder Halogenpropionylamino-Rest.

Von den erfindungsgemäßen Farbstoffen der allgemeinen Formel (1) sind insbesondere bevorzugt Anthrachinonfarbstoffe entsprechend der nachstehenden allgemeinen Formel (4), Phthalocyaninfarbstoffe entsprechend der nachstehenden allgemeinen Formel (5), Triphendioxazinfarbstoffe entsprechend der nachstehenden allgemeinen Formel (6) und Kupferkomplex-Formazan-Farbstoffe entsprechend der nachstehenden allgemeinen Formel (7):

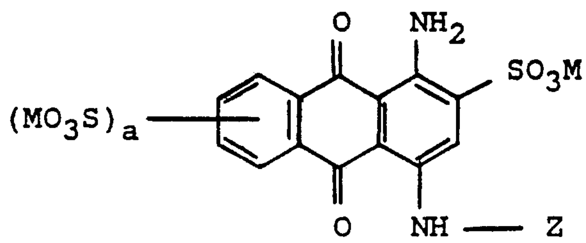

(4)

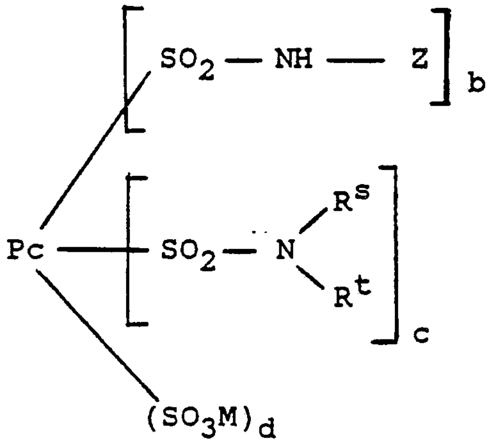

(5)

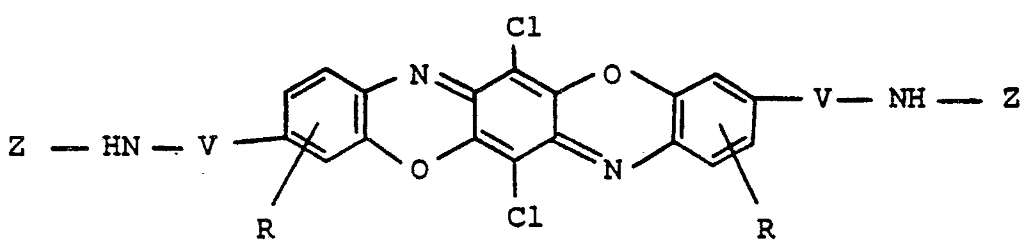

(6)

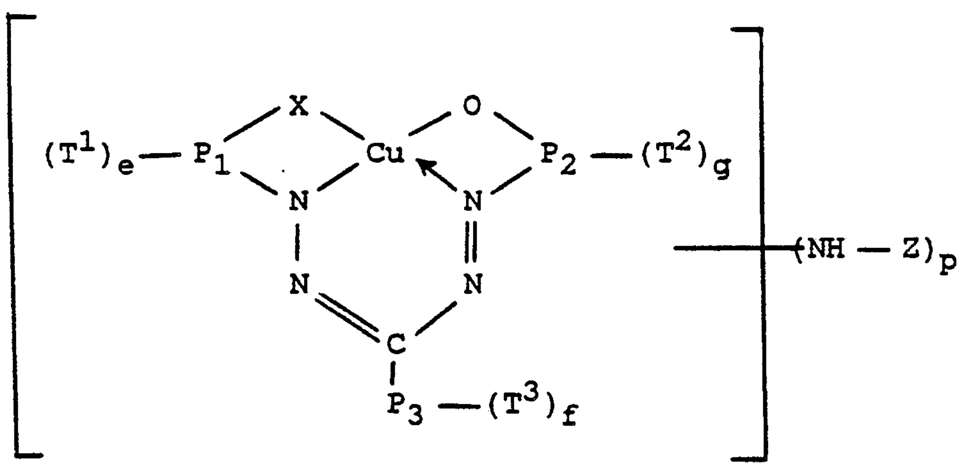

(7)

in welchen bedeuten:

Z ist ein Rest der oben genannten und definierten allgemeinen Formel (3);

M hat die obengenannte Bedeutung;

a ist die Zahl Null oder 1 (wobei diese Gruppe im Falle von a gleich Null ein Wasserstoffatom bedeutet)

Pc ist der Rest des Kupfer- oder Nickelphthalocyanins, wobei der Phthalocyaninrest noch in den 3- und/oder 4-Stellungen der carbocyclischen aromatischen Ringe des Phthalocyanins durch Halogenatome,

wie Chloratome, oder Phenylreste substituiert sein kann und in welchem die Sulfonamid- und/oder Sulfogruppen in den 3- und/oder 4-Stellungen der carbocyclischen aromatischen Ringe des Phthalocyanins gebunden sind;

$R^s$ ist ein Wasserstoffatom oder eine Alkylgruppe von 1 bis 4 C-Atomen, wie die Methyl- und n-Propylgruppe und bevorzugt die Ethylgruppe, die durch Sulfo, Carboxy, Phosphato, Hydroxy, Sulfato, Phenyl, Sulfophenyl, ß-Sulfatoethylsulfonyl oder 3- oder 4-(ß-Sulfatoethylsulfonyl)-phenyl substituiert sein kann, und ist bevorzugt ein Wasserstoffatom;

$R^t$ ist ein Wasserstoffatom oder eine Alkylgruppe von 1 bis 4 C-Atomen, wie die Methyl- und n-Propylgruppe und bevorzugt die Ethylgruppe, die durch Sulfo, Carboxy, Phosphato, Hydroxy, Sulfato, Phenyl, Sulfophenyl, ß-Sulfatoethylsulfonyl oder 3- oder 4-(ß-Sulfatoethylsulfonyl)-phenyl substituiert sein kann, oder ist ein Phenylrest, der durch 1 oder 2 Substituenten aus der Gruppe Methyl, Ethyl, Methoxy, Ethoxy, Chlor, Sulfo, Carboxy und ß-Sulfatoethylsulfonyl substituiert sein kann, und ist bevorzugt ein Wasserstoffatom;

b ist eine ganze oder gebrochene Zahl von 1 bis 2,

c ist eine ganze oder gebrochene Zahl von Null bis 2, vorzugsweise die Zahl Null,

d ist eine ganze oder gebrochene Zahl von Null bis 3, vorzugsweise von 0,5 bis 2,5,

wobei die Summe von (b + c + d) eine ganze oder gebrochene Zahl von 3 bis 4 ist;

V ist eine direkte Bindung oder eine Gruppe entsprechend der allgemeinen Formel -NH-E- , in welcher E einen Phenylenrest bedeutet, der durch 1 oder 2 Substituenten aus der Gruppe Alkyl von 1 bis 4 C-Atomen, wie Ethyl und insbesondere Methyl, Alkoxy von 1 bis 4 C-Atomen, wie Ethoxy und insbesondere Methoxy, Halogen, wie Brom und Chlor, Carboxy und Sulfo substituiert sein kann, oder eine Alkylengruppe von 2 bis 6 C-Atomen, bevorzugt von 2 bis 3 C-Atomen, ist;

R ist ein Wasserstoffatom oder eine Alkylgruppe von 1 bis 4 C-Atomen, wie Ethyl und insbesondere Methyl, eine Alkoxygruppe von 1 bis 4 C-Atomen, wie Ethoxy und insbesondere Methoxy, die Acetylamino-, Nitro- oder Carboxygruppe oder ein Halogenatom, wie Chlor, oder bevorzugt eine Sulfogruppe;

X ist ein Sauerstoffatom oder eine Sulfogruppe oder bevorzugt die Carbonyloxygruppe der Formel -COO- ;

$P_1$ und $P_2$ bedeuten, unabhängig voneinander, einen Benzoy-oder Naphthalinring, wobei $P_1$ das Stickstoffatom und die Gruppe X ortho-ständig zueinander und $P_2$ das Sauerstoffatom und das Stickstoffatom ortho-ständig zueinander gebunden enthalten und die Benzolkerne bzw. Naphthalinkerne noch durch einen oder zwei Substituenten aus der Gruppe Halogen, wie Chlor, Nitro, Alkyl von 1 bis 4 C-Atomen, wie Methyl und Ethyl, Alkoxy von 1 bis 4 C-Atomen, wie Methoxy und Ethoxy, Sulfamoyl, durch Alkyl von 1 bis 4 C-Atomen mono- oder disubstituiertes Sulfamoyl, Alkylsulfonyl von 1 bis 4 C-Atomen, wie Methylsulfonyl und Ethylsulfonyl, und Phenylsulfonyl substituiert sein können, wobei sowohl $P_1$ als auch $P_2$ beide bevorzugt einen Benzolring bedeuten;

$P_3$ ist eine geradkettige oder verzweigte Alkylengruppe von 2 bis 6 C-Atomen, vorzugsweise von 2 bis 4 C-Atomen, die durch eine Sulfophenylgruppe substituiert sein kann, oder ist eine Phenylengruppe oder eine Naphthylengruppe, die durch 1 oder 2 Substituenten aus der Gruppe Methyl, Ethyl, Methoxy, Ethoxy und Chlor substituiert sein können, wobei $P_3$ bevorzugt ein Benzolring ist;

$T^1$, $T^2$ und $T^3$ bedeuten, unabhängig voneinander, eine Sulfo-oder Carboxygruppe, bevorzugt Sulfogruppe;

e, f und g stellen, unabhängig voneinander, die Zahl Null, 1 oder 2 dar, wobei die Summe von (e+f+g) eine ganze Zahl von 1 bis 4 bedeutet und vorzugsweise 2 oder 3, insbesondere 2, ist, wobei im Falle von e oder f oder g gleich Null die Gruppe $T^1$ bzw. $T^2$ bzw. $T^3$ ein Wasserstoffatom bedeutet;

p steht für die Zahl 1 oder 2, bevorzugt 1, wobei die Gruppe -NH-Z an einen aromatischen Rest von $P_1$, $P_2$ oder $P_3$ gebunden sein kann und bevorzugt an $P_2$ gebunden ist.

Bevorzugt sind von den Kupferformazanfarbstoffen der allgemeinen Formel (7) diejenigen, in welchen $P_1$ und $P_2$ beide für einen Benzoring stehen und $T^1$ und $T^2$ jedes eine Sulfogruppe bedeutet, wobei e und g beide für die Zahl 1 stehen, falls die Gruppe -NH-Z an $P_2$ gebunden ist. Sofern die Gruppe -NH-Z an $P_1$ gebunden ist, ist e die Zahl Null, g die Zahl 2 und $T^2$ eine Sulfogruppe. Bevorzugt ist weiterhin die Gruppierung $-P_3-(T^3)_f$ der Phenyl- oder ein 2- oder 4-Sulfo-phenyl-Rest.

Die vorliegende Erfindung betrifft weiterhin Verfahren zur Herstellung der erfindungsgemäßen Farbstoffe der allgemeinen Formel (1). So können sie erfindungsgemäß hergestellt werden, indem man eine Verbindung der allgemeinen Formel (8)

$A \{Hal)_m$ (8)

in welcher A die obengenannte Bedeutung besitzt, Hal für ein Halogenatom, wie ein Brom- oder Chloratom, steht, wobei Hal auch über eine Sulfonylgruppe an A gebunden sein kann, und m eine Zahl von 1 bis 4 bedeutet, wobei m bevorzugt die Zahl 1 oder 2 ist und im Falle, daß Hal über eine Sulfonylgruppe an A gebunden ist, bevorzugt für die Zahl 3 oder 4 steht,

mit der 1- bis 2-fach molaren Menge einer Aminoverbindung der allgemeinen Formel (9)

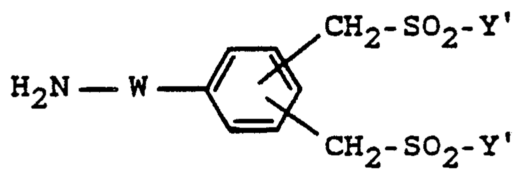

(9)

in welcher W die obengenannte Bedeutung besitzt und Y′ eine der Bedeutungen von Y hat oder die ß-Hydroxyethyl-Gruppe ist, umsetzt und im Falle, daß man von einer Verbindung der allgemeinen Formel (9) mit Y′ gleich ß-Hydroxyethyl-Gruppen ausgeht, die erhaltene Verbindung entsprechend der allgemeinen Formel (1), in welcher jedoch die beiden Y hier ß-Hydroxyethyl-Gruppen bedeuten, in die Schwefelsäurehalbester-Verbindung der allgmeinen Formel (1) mit Y den ß-Sulfatoethyl-Gruppen analog bekannten Verfahrensweisen, wie beispielsweise mittels konzentrierter Schwefelsäure bei einer Temperatur zwischen 0 und 40° C, überführt. Die Sulfatisierung kann auch mittels Chlorsulfonsäure in einem polaren Lösemittel, wie beispielsweise N-Methyl-pyrrolidon, bei einer Temperatur zwischen 10 und 80° C erfolgen. Durch Einwirkung von Schwefelsäure oder Oleum auf Verbindungen der allgemeinen Formel (1), insbesondere im Falle, daß die Gruppen Y hier ß-Hydroxyethyl-Gruppen bedeuten, können die Verbindungen der Formel (1) mit einer Gruppierung der Formel (2), in welcher n für die Zahl 1 oder 2 steht, durch Einführung einer (weiteren) oder zwei Sulfogruppen in entsprechende Verbindungen der Formel (1) mit n der Zahl 1 oder 2 übergeführt werden; diese Sulfonierungsreaktion führt man analog üblichen Verfahrensweisen in der Regel bei einer Temperatur zwischen 30 und 80° C, bevorzugt zwischen 40 und 60° C, durch.

Die erfindungsgemäßen Farbstoffe der allgemeinen Formel (1) können auch erfindungsgemäß hergestellt werden, indem man von Farbstoffvorprodukten ausgeht, die bereits einen Rest der Formel -NH-Z enthalten, in welchem hier Y auch für eine ß-Hydroxyethyl-Gruppe stehen kann. Diese Variante ist geeignet zur Herstellung von solchen erfindungsgemäßen Farbstoffen, worin A der Rest eines aus zwei oder mehr als zwei Komponenten zusammengesetzten Farbstoffes ist, beispielsweise eines Kupfer- oder Nickelphthalocyanins; eines Kupferformazans oder eines Triphendioxazins. Grundsätzlich lassen sich die erfindungsgemäßen Farbstoffe sämtlicher Farbstoffklassen analog bekannten Verfahrensweisen herstellen, indem man von Vorprodukten oder Zwischenprodukten für diese Farbstoffe ausgeht, wobei mindestens eines der Vor- oder Zwischenprodukte die Gruppierung -NH-Z , in welcher Y gegebenenfalls auch ß-Hydroxyethyl ist, enthält, das anschließend in die Endstufe umgewandelt wird, beispielsweise durch Veresterung, wie Sulfatierung, oder durch eine Additionsreaktion.

Bevorzugt ist jedoch die Synthese der erfindungsgemäßen Farbstoffe durch Umsetzung einer Verbindung der allgemeinen Formel (8) mit einer Verbindung der allgemeinen Formel (9). Diese erfindungsgemäße Kondensationsreaktion erfolgt in an sich bekannter Weise in wäßriger oder wäßrig-organischer Lösung bei einer Temperatur zwischen 20 und 100° C, bevorzugt zwischen 30 und 85° C, und bei einem pH-Wert zwischen 3,5 und 10, bevorzugt zwischen 5,5 und 7,5, wobei im Falle, daß Hal über eine Sulfonylgruppe an A gebunden ist, ein Teil der Sulfonylhalogenidgruppen zu Sulfogruppen hydrolysiert werden kann. Besitzen die erfindungsgemäß hergestellten Farbstoffe zudem Gruppen, die zur Metallkomplexbildung befähigt sind, wie beispielsweise Hydroxy-, Carboxy-, Amino- oder Sulfogruppen, so können sie auch nachträglich in die entsprechenden Metallkomplex-Derivate übergeführt werden.

So stellt man beispielsweise die erfindungsgemäßen Anthrachinonfarbstoffe der allgemeinen Formel (4) in der Weise her, daß man ein Verbindung der allgemeinen Formel (4A)

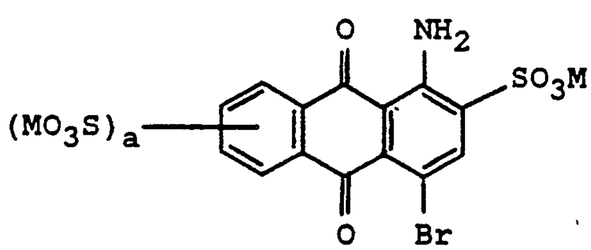

(4A)

in welcher M und a die obengenannten Bedeutungen haben, mit einer Verbindung der allgemeinen Formel (9), vorzugsweise in Gegenwart von Kupferpulver und Kupfer(I)-Ionen, in wäßrigem Medium bei einer Temperatur zwischen 50 und 80° C und bei einem pH-Wert zwischen 7,5 und 10,5 umsetzt. Solche Verfahrensweisen der Umsetzung von 1-Amino-2 sulfo-4-bromanthrachinon-Verbindungen mit einer Aminoverbindung sind beispielsweise aus Venkataraman, The Chemistry of Synthetic Dyes, Vol. II, Seite 840, Ac.

Press, N.Y. 1952,bekannt. Vorzugsweise geht man von einer Verbindung der Formel (9) aus, in welcher Y′ die ß-Hydroxyethyl-Gruppe bedeutet und führt anschließend nach erfolgter Kondensationsreaktion die Anthrachinonverbindung mit den ß-Hydroxyethyl-Gruppen, wie oben angegeben, in die erfindungsgemäße Verbindung mit ß-Sulfatoethyl-Gruppen über.

Die erfindungsgemäßen Phthalocyaninfarbstoffe der allgemeinen Formel (5) können beispielsweise hergestellt werden, indem man ein Phthalocyaninsulfochlorid der allgemeinen Formel (5A)

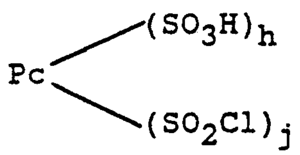

(5A)

in welcher Pc die obengenannte Bedeutung besitzt, h für eine ganze oder gebrochene Zahl von Null bis 2, bevorzugt für Null steht und eine ganze oder gebrochene Zahl von 2 bis 4 ist, wobei die Summe von (h + j) gleich eine ganze oder gebrochene Zahl von 2 bis 4 bedeutet, mit einer Aminoverbindung der allgemeinen Formel (9) und gegebenenfalls mit einer Aminoverbindung der allgemeinen Formel $H_2NR^sR^t$ mit $R^s$ und $R^t$ der in Formel (5) angegebenen Bedeutung unter gegebenenfalls gleichzeitiger oder nachträglicher Hydrolyse von Sulfochloridgruppen zu Sulfogruppen kondensiert. Solche Verfahrensweisen der Umsetzung von Phthalocyaninsulfochlorid-Verbindungen und Aminoverbindungen bei gegebenenfalls zusätzlicher Hydrolyse von Sulfochloridgruppen zu Sulfogruppen sind zahlreich in der Literatur beschrieben, so beispielsweise in der US-Patentschrift 4 745 187 und der darin diesbezüglich zusätzlich aufgeführten Literatur; die erfindungsgemäße Herstellung der Phthalocyaninfarbstoffe der Formel (5) kann in analoger Weise ausgeführt werden. So erfolgt die Umsetzung mit gegebenenfalls gleichzeitiger Hydrolyse in bevorzugt wäßrigem Medium und bevorzugt bei einer Temperatur zwischen 20 und 45°C und einem pH-Wert zwischen 5,5 und 7,5.

Die erfindungsgemäße Synthese der Triphendioxazinfarbstoffe der allgemeinen Formel (6) erfolgt beispielsweise durch Umsetzung einer Verbindung der allgemeinen Formel (9), bevorzugt mit Y′ gleich den ß-Hydroxyethyl-Gruppen, mit 2,3,5,6-Tetrachlor-1,4-benzochinon und anschließender Cyclisierung zum Triphendioxazin und gegebenenfalls gleichzeitiger Sulfatisierung der ß-Hydroxyethyl-Gruppen. Solche Verfahrensweisen sind beispielsweise in der Britischen Patentschrift Nr. 1 589 915 und in den Europäischen Patentanmeldungs-Veröffentlichungen Nr. 0 141 359A, 0 141 996A und 0 168 751A beschrieben. Die Ringschlußreaktion des zuvor gebildeten Kondensationsproduktes aus dem Amin der allgemeinen Formel (9) und dem Tetrachlor-benzochinon erfolgt in konzentrierter Schwefelsäure oder insbesondere Schwefeltrioxid enthaltende Schwefelsäure als Reaktionsmedium bei einer Temperatur zwischen 10 und 25°C, wobei man vorteilhaft ein Oxidationsmittel zusetzt, wie beispielsweise das oben bereits erwähnte Schwefeltrioxid oder Kalium- oder Ammoniumperoxidisulfat, Wasserstoffperoxid oder Jod.

Sowohl die Verbindungen entsprechend der allgemeinen Formel (1) als auch die der allgemeinen Formel (9), in welchen Y bzw. Y′ die ß-Hydroxyethyl-Gruppe bedeuten, können in üblicher und bekannter Verfahrensweise in Verbindungen übergeführt werden, in welchen Y bzw. Y′ eine andere Bedeutung als die ß-Hydroxyethyl-Gruppe besitzt, so beispielsweise in deren Esterderivate, wie beispielsweise von mehrwertigen anorganischen Säuren oder von aliphatischen und aromatischen Carbon- oder Sulfonsäuren, so beispielsweise in Verbindungen, in welchen Y bzw. Y′ für die ß-Chlorethyl-, ß-Sulfatoethyl-, ß-Phosphatoethyl-, ß-Thiosulfatoethyl-, ß-Acetyloxyethyl- oder ß-Toluylsulfonyloxyethyl-Gruppe steht. Hierfür geeignete Veresterungs- und Acylierungsmittel sind beispielsweise die entsprechenden anorganischen oder organischen Säuren oder deren Anhydride oder Halogenide oder Amide, wie beispielsweise Schwefelsäure, Schwefeltrioxid enthaltende Schwefelsäure, Chlorsulfonsäure, Amidosulfonsäure, Phosphorsäure, Polyphosphorsäure, Phosphoroxychlorid, Gemische aus Phosphorsäure und Phosphorpentoxid, Acetanhydrid, Toluolsulfochlorid und Thionylchlorid.

Diejenigen Verbindungen, in welchen Y bzw. Y′ für die Vinylgruppe steht, können aus deren analogen Esterderivaten mittels Alkali, so in wäßrigem Medium bei einem pH-Wert von 10 bis 12 und einer Temperatur zwischen 30 und 50°C während 10 bis 20 Minuten, hergestellt werden. Die Synthese von beispielsweise ß-(Dialkylamino)-ethylsulfonyl- und ß-Thio sulfatoethylsulfonyl-Derivaten der Verbindungen (1) und (9) erfolgt durch Umsetzung von deren Vinylsulfonyl-Verbindungen mit dem entsprechenden Dialkylamin oder mit einem Alkalisalz der Thioschwefelsäure, wie Natriumthiosulfat. Alle diese Verfahrensweisen der Überführung von einer Gruppe $-SO_2-Y'$ bzw. $-SO_2-Y$ in eine andere sind dem Fachmann auf diesem faserreaktiven Gebiet geläufig und zahlreich in der Literatur beschrieben.

Die Aminoverbindungen der allgemeinen Formel (9), in welchen W für die direkte kovalente Bindung steht, können hergestellt werden, indem man von einem 1,2-Di-(halogenomethyl)-benzol oder den entsprechenden 1,3- oder 1,4-Isomeren ausgeht, wobei das Halogen bevorzugt ein Chloratom ist, und das Di-(halogenomethyl)-benzol mit Mercaptoethanol im wäßrigen Medium bei einem pH-Wert zwischen 8 und 12, bevorzugt zwischen 10,5 und 11,5, und bei einer Temperatur zwischen 30 und 120° C, vorzugsweise zwischen 70 und 100° C, zu den entsprechenden Di-thioether-Verbindungen umsetzt. Anschließend wird die erhaltene Thioetherverbindung analog bekannten Verfahrensweisen zu der entsprechenden Sulfonylverbindung oxidiert. Die Oxidation kann nach verschiedenen Methoden erfolgen, beispielsweise in wäßrigem, saurem Medium, bevorzugt bei einem pH-Wert von unterhalb 5, mittels Wasserstoffperoxid in Gegenwart oder Abwesenheit von Wolfram- oder Vanadinverbindungen als Katalysatoren, ferner mittels Peressigsäure, Kaliumpermanganat oder Chromsäure, jeweils bei einer Temperatur zwischen 50 und 120° C, vorzugsweise zwischen 80 und 100° C, oder mittels einer Lösung von elementarem Chlor in wäßriger Salzsäure gemäß den Angaben der Deutschen Patentschrift Nr. 887 505; bei der Anwendung von Chlor/Salzsäure erhält man die entsprechenden ß-Chlorethylsulfonyl-Verbindungen der allgemeinen Formel (9).

Die erhaltenen Di-(ß-chlorethylsulfonyl-methyl)- bzw. Di-(ß-hydroxyethylsulfonyl-methyl)-benzolverbindungen werden anschließend in üblicher Weise nitriert, beispielsweise in einem Gemisch aus Salpetersäure und konzentrierter Schwefelsäure bei einer Temperatur zwischen 30 und 100° C.

Hierbei gehen die Hydroxygruppen in die Schwefelsäureestergruppen über, die anschließend wiederum bei erhöhter Temperatur in wäßrig-mineralsaurer Lösung hydrolysiert werden. Die erhalt nen Nitroverbindungen werden sodann nach üblichen Verfahrensweisen zu den Anilinverbindungen reduziert. Die Reduktion kann mittels Wasserstoff an einen metallischen Katalysator, wie einem Palladium-, Platin oder Raney-Nickel-Katalysator, unter Druck im Autoklaven, beispielsweise bei einem Wasserstoffdruck von 25 bis 35 bar und einer Temperatur zwischen 40 und 80° C, oder mittels der Reduktion nach Béchamp bei Verwendung von Eisenspänen erfolgen. Die ß-Hydroxyethylsulfonyl-Gruppen können dann gemäß den obigen Angaben in faserreaktive Gruppen entsprechend der Formel $-SO_2-Y$ mit Y einer der obigen Bedeutungen übergeführt werden.

Die Ausgangsverbindungen der allgemeinen Formel (9), in welchen W für eine Gruppe der allgemeinen Formel (2) steht, sind in der Weise herstellbar, indem man eine Verbindung der allgemeinen Formel (9), in welcher Y′ ß-Hyroxyethyl-Gruppen bedeuten und W die direkte kovalente Bindung ist, mit 3- oder 4-Nitrobenzoylchlorid in wäßriger Natriumbicarbonatlösung bei einer Temperatur zwischen 20 und und 70° C umsetzt und anschließend die Nitrogruppe, beispielsweise gemäß den obigen Angaben, reduziert.

Die erfindungsgemäßen Verbindungen der allgemeinen Formel (1) - im nachfolgenden allgemein als Verbindungen (1) bezeichnet -haben faserreaktive Eigenschaften und besitzen sehr wertvolle Farbstoffeigenschaften. Sie können deshalb zum Färben (einschließlich Bedrucken) von hydroxygruppenhaltigen und/oder carbonamidgruppenhaltigen Materialien verwendet werden. Hierzu können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Die Abscheidung und Isolierung der Verbindungen (1) aus den wäßrigen Syntheselösungen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder durch Eindampfen oder Sprühtrocknung der Reaktionslösung. Falls die letztgenannte Art der Isolierung gewählt wird, empfiehlt es sich zuweilen, vor dem Eindampfen eventuell in den Lösungen vorhandene Sulfatmengen durch Fällung als Calciumsulfat und Abtrennung durch Filtration zu entfernen.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie in Form von Garnen (Strangmaterial, Wickelkörpern) und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide. Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten

Substraten, insbesondere auf den genannten Fasermaterialien, nach den für wasserlösliche, faserreaktive Farbstoffe bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind in der Literatur zahlreich beschrieben.

Besonders geeignet sind die erfindungsgemäßen Farbstoffe für das sogenannte Kaltverweilverfahren, wonach der Farbstoff zusammen mit dem Alkali mittels einem Foulard auf das Material aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz eines dispergierend wirkenden und die Diffusion der nicht fixierten Anteile fördernden Mittels gründlich gespült.

Falls erfindungsgemäße Farbstoffe, wie beispielsweise Anthrachinonfarbstoffe, eine ungenügende Löslichkeit in der alkalischen Färbeflotte aufweisen, kann dieser Mangel in der aus der Literatur bekannten Weise (s. bspw. Deutsche Offenlegungsschrift Nr. 2 412 964) durch Zusatz von Dispergatoren oder anderen nicht farbigen Verbindungen, z.B. ein Naphthalinsulfonsäure-Formaldehyd-Kondensat oder insbesondere Anthrachinon-2-sulfonsäure, behoben werden.

Die erfindungsgemäßen Farbstoffe zeichnen sich durch eine hohe Faserreaktivität, durch gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein ist, weswegen der Verlust durch Seifen nur sehr gering ist. Die erfindungsgemäßen Farbstoffe eignen sich auch besonders zum Druck, vor allem auf Baumwolle, ebenso aber auch zum Bedrucken von stickstoffhaltigen Fasern, z.B. von Wolle oder Seide oder Mischgeweben, die Wolle oder Seide enthalten.

Die mit den erfindungsgemäßen Farbstoffen hergestellten Färbungen und Drucke auf Cellulosefasermaterialien besitzen eine hohe Farbstärke und eine hohe Faser-Farbstoff-Bindungsstabilität, sowohl im sauren aus auch im alkalischen Bereich, weiterhin eine gute Lichtechtheit und sehr gute Naßechtheitseigenschaften, wie Wasch-, Wasser-, Seewasser-, Überfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt: Gewichtsteile beziehen sich zu Volument ilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet.

Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel 1**

Eine Suspension von 38,2 Teilen 1-Amino-2-sulfo-4-brom-anthrachinon und 46,9 Teilen 2,5-Di-(β-hydroxyethylsulfonyl-methyl)-anilin in 250 Teilen Wasser wird mit 10 Teilen Natriumhydrogencarbonat und 5,3 Teilen Natriumcarbonat versetzt. Die Suspension wird auf 75° C erwärmt und während drei Stunden bei dieser Temperatur gehalten, wobei man portionsweise 1 Teil eines Gemisches aus gleichen Teilen Kupferpulver und Kupfer(I)chlorid einträgt. Danach rührt man den Ansatz bei 75° C bis zur Beendigung der Umsetzung nach. Man kühlt die Suspension auf 20° C ab und salzt die entstandene Verbindung. 1-Amino-2-sulfo-4-N-[2′,5′-di-(β-hydroxyethylsulfonylmethyl)-phenyl]-amino-anthrachinon mittels 40 Teilen Natriumchlorid aus, filtriert sie ab und trocknet sie. Man gibt sie in die dreifache Gewichtsmenge Schwefelsäuremonohydrat und rührt den Ansatz bis zur vollständigen Lösung der Verbindung. Die schwefelsaure Lösung wird sodann auf Eis gegossen und die ausgefallene erfindungsgemäße Verbindung abfiltriert, in Eiswasser angerührt und nach Neutralisation durch Sprühtrocknung der Lösung isoliert.

Man erhält das Alkalimetallsalz der Verbindung der Formel

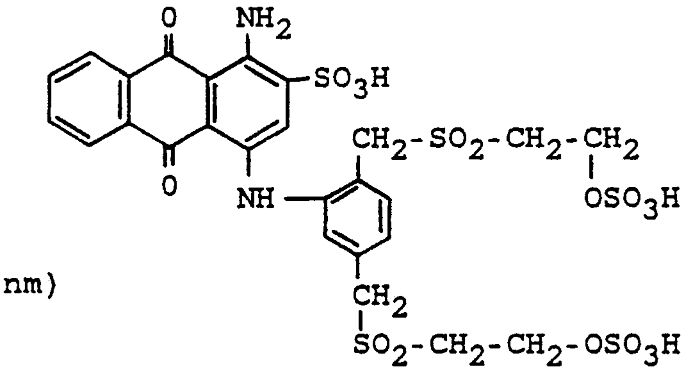

($\lambda_{max}$= 581 nm)

die sehr gute faserreaktive Farbstoffeigenschaften besitzt und die in der Beschreibung genannten Materialien, wie insbesondere Cellulosefasernmaterialien, beispielsweise Baumwolle, nach den in der Technik für faserreaktive Farbstoffe üblichen Applikations- und Fixierverfahren in farbstarken, blauen Tönen mit guten Echtheitseigenschaften färbt.

**Beispiel 2**

Eine Suspension von 38,2 Teilen 1-Amino-2-sulfo-4-brom-anthrachinon und 50 Teilen 4-Amino-benzoesäure-N′-[2′,5′-di-(β-hydroxyethylsulfonylmethyl)-phenyl]-amid in 250 Teilen Wasser wird mit 10 Teilen Natriumhydrogencarbonat und 5,3 Teilen Natriumcarbonat versetzt. Die Suspension wird auf 75° C erwärmt und während drei Stunden bei dieser Temperatur gehalten, wobei man portionsweise 1 Teil eines Gemisches aus gleichen Teilen Kupferpulver und Kupfer(I)chlorid einträgt. Danach rührt man den Ansatz bei 75° C bis zur Beendigung der Umsetzung nach. Man kühlt die Suspension auf 20° C ab und salzt die entstandene Verbindung 1-Amino-2-sulfo-4-N-[2′,5′-di-(β-hydroxyethylsulfonylmethyl)-phenyl]-amino-anthrachinon mittels 40 Teilen Natriumchlorid aus, filtriert sie ab und trocknet sie. Man gibt sie in die vierfache Gewichtsmenge Schwefelsäure-monohydrat mit einem Gehalt von 10 % Schwefeltrioxid und rührt den Ansatz bis zur vollständigen Lösung der Verbindung. Danach wird der Reaktionsansatz auf 100 bis 110° C erhitzt und noch eine Stunde innerhalb dieses Temperaturbereiches gehalten. Die schwefelsaure Lösung wird sodann auf Eis gegossen und die ausgefallene erfindungsgemäße Verbindung abfiltriert, in Eiswasser angerührt und nach Neutralisation durch Sprühtrocknung der Lösung isoliert.

Man erhält das Alkalimetallsalz der Verbindung der Formel

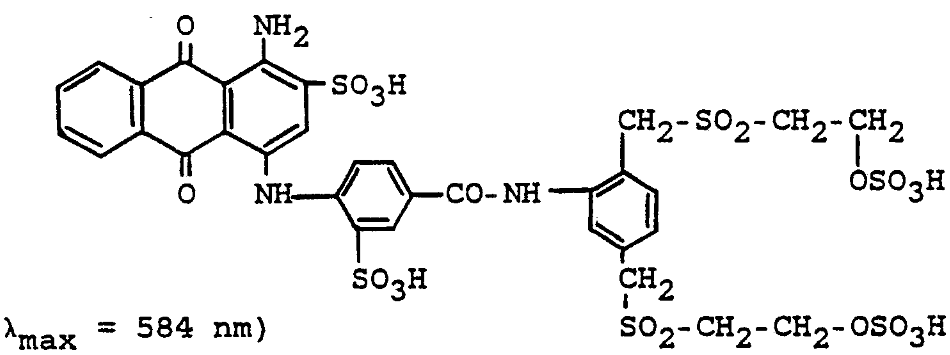

($\lambda_{max}$ = 584 nm)

die sehr gute faserreaktive Farbstoffeigenschaften besitzt und die in der Beschreibung genannten Materialien, wie insbesondere Cellulosefasernmaterialien, beispielsweise Baumwolle, nach den in der Technik für faserreaktive Farbstoffe üblichen Applikations- und Fixierverfahren in farbstarken, blauen Tönen mit guten Echtheitseigenschaften färbt.

**Beispiele 3 bis 12**

In den nachfolgenden Tabellenbeispielen werden weitere erfindungsgemäße Anthrachinonfarbstoffe entsprechend der allgemeinen Formel (A)

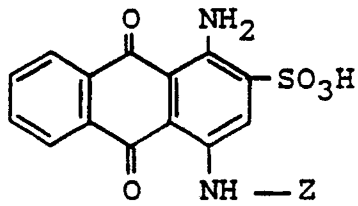

(A)

beschrieben. Sie lassen sich in erfindungsgemäßer Weise, beispielsweise analog den obigen Ausführungsbeispielen durch Umsetzung von 1-Amino-2-sulfo-4-brom-anthrachinon und der Aminoverbindung entsprechend der allgemeinen Formel (9), gegebenenfalls bei gleichzeitiger Einführung einer Sulfogruppe in die Komponente der Formel (9), herstellen. Sie besitzen ebenfalls gute faserreaktive Farbstoffeigenschaften und liefern auf den in der Beschreibung genannten Materialien, wie insbesondere Cellulosefasermaterialien, farbstarke Färbungen und Drucke mit guten Echtheitseigenschaften in dem in dem jeweiligen Tabellenbeispiel angegebenen Farbton.

| Bsp. | Rest Z | Farbton |
|---|---|---|
| 3 | 3,4-Di-(β-sulfatoethylsulfonyl-methyl)-phenyl | blau |
| 4 | 2,4-Di-(β-sulfatoethylsulfonyl-methyl)-phenyl | blau |
| 5 | 2-Sulfo-4-N-[2′,5′-di-(vinylsulfonyl-methyl)-phenyl]-amidocarbonyl-phenyl | blau |
| 6 | 2-Sulfo-4-N-[3′,4′-di-(β-sulfatoethylsulfonyl-methyl)-phenyl]-amidocarbonyl-phenyl | blau |
| 7 | 2-Sulfo-4-N-[2′,4′-di-(β-sulfatoethylsulfonyl-methyl-phenyl]-amidocarbonyl-phenyl | blau |
| 8 | 4-N-[2′,5′-Di(β-sulfatoethylsulfonyl-methyl)-phenyl]-amidocarbonyl-phenyl | blau |
| 9 | 4-N-[3′,4′-Di-(β-sulfatoethylsulfonyl-methyl)-phenyl]-amidocarbonyl-phenyl | blau |
| 10 | 3-N-[2′,5′-Di-(β-sulfatoethylsulfonyl-methyl)-phenyl]-amidocarbonyl-phenyl | blau |
| 11 | 3-N-[3′,4′-Di-(β-sulfatoethylsulfonyl-methyl)-phenyl]-amidocarbonyl-phenyl | blau |
| 12 | 3-N-[2′,4′-Di-(β-sulfatoethylsulfonyl-methyl)-phenyl]-amidocarbonyl-phenyl | blau |

**Beispiel 13**

Man gibt bei 15 bis 20 °C 36 Teile Kupferphthalocyanin portionsweise innerhalb einer Stunde in 300 Teile Chlorsulfonsäure und erwärmt den Ansatz langsam innerhalb von 2 Stunden auf 110 °C und anschließend innerhalb einer Stunde auf 135 °C. Man rührt noch einige Stunden bei 130 bis 135 °C nach, kühlt den Ansatz auf Raumtemperatur ab und gießt ihn auf ein Gemisch aus Eis und Wasser. Man gibt etwa 40 Teile Natriumchlorid hinzu, filtriert das ausgefallene Kupferphthalocyanin-sulfochlorid-Produkt ab und wäscht es mit natriumchloridhaltigem Eiswasser nach. 250 Teile dieses Filterrückstandes werden in 800 Teilen Eiswasser bei einem pH-Wert zwischen 2,5 und 3 suspendiert. Man gibt eine Lösung von 71,6 Teilen 2,5-Di-(β-sulfatoethylsulfonyl-methyl)-anilin in 200 Teilen Wasser bei einem pH-Wert von 2 hinzu, erhöht anschließend den pH-Wert langsam auf 5,0 bis 5,5 mittels wäßrigem Ammoniak und darauf die Reaktionstemperatur auf 50 °C und rührt bei dieser Temperatur noch eine Stunde weiter, während der der pH-Wert mittels konzentriertem wäßrigem Ammoniak bei 6,5 bis 7,0 gehalten wird.

Aus dieser Syntheselösung wird die erfindungsgemäße Phthalocyaninverbindung mittels Natriumchlorid ausgesalzen. Sie besitzt, in Form der freien Säure geschrieben, die Formel

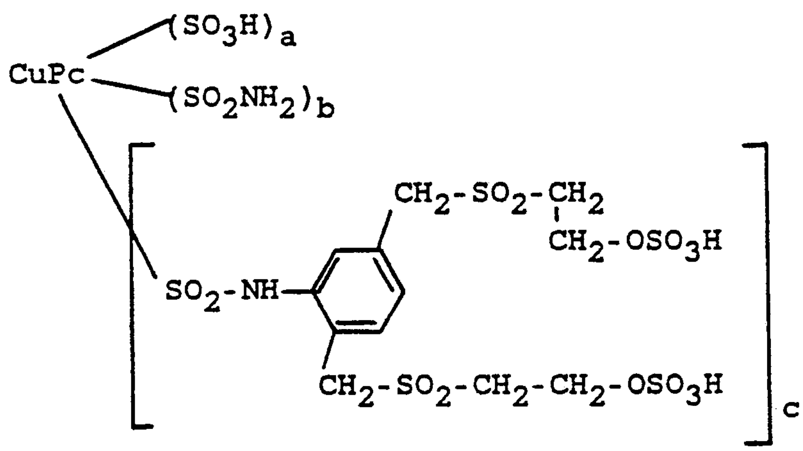

$(\lambda_{max} = 621\ nm)$

in welcher die Summe von (a+b) eine Zahl von etwa 2,6 und c die Zahl von etwa 1,4 bedeutet und CuPc den Rest des Kupferphthalocyanins darstellt.

Die erfindungsgemäße Kupferphthalocyaninverbindung besitzt sehr gute faserreaktive Farbstoffeigenschaften und liefert bei Anwendung der üblichen Applikations- und Fixierverfahren für faserreaktive Farbstoffe auf den in der Beschreibung genannten Materialien, wie insbesondere Cellulosefasermaterialien, beispielsweise Baumwolle, farbstarke, echte Färbungen und Drucke in klaren Türkistönen.

**Beispiele 14 bis 20**

In den nachfolgenden Tabellenbeispielen sind weitere erfindungsgemäße Kupferphthalocyaninfarbstoffe mit Hilfe der allgemeinen Formel (B)

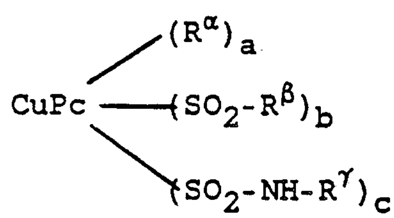

beschrieben. Sie lassen sich in erfindungsgemäßer Weise, beispielsweise analog den Angaben des Beispiels 13, durch Umsetzung eines im Stand der Technik üblichen, gegebenenfalls sulfogruppenhaltigen Kupferphthalocyanin-sulfochlorids mit der Aminoverbindung entsprechend der allgemeinen Formel $H_2N\text{-}R^{\gamma}$, die dem Amin der allgemeinen Formel (9) entspricht, und gegebenenfalls gleichzeitiger Umsetzung mit Ammoniak oder einem anderen Amin entsprechend der allgemeinen Formel $H_2N\text{-}R^{\beta}$ herstellen. Sie besitzen ebenfalls gute faserreaktive Farbstoffeigenschaften und färben die in der Beschreibung genannten Materialien, wie insbesondere Cellulosefasermaterialien, nach den üblichen Färbe- und Druckverfahren für faserreaktive Farbstoffe in farbstarken, echten Tönen.

| Bsp. | $R^{\alpha}$ | $R^{\beta}$ | a | b | $R^{\gamma}$ | c | Farbton |
|---|---|---|---|---|---|---|---|
| 14 | Sulfo | Amino | (a+b) = 2,6 | | 3,4-Di-(β-sulfatoethylsulfonyl-methyl)-phenyl | 1,4 | türkis |
| 15 | Sulfo | Amino | (a+b) = 2,6 | | 4-N-[2',5'-Di-(β-sulfatoethylsulfonyl-methyl)-phenyl]-amidocarbonyl-phenyl | 1,4 | türkis |
| 16 | Sulfo | Amino | (a+b) = 2,6 | | 3-N-[2',5'-Di-(β-sulfatoethylsulfonyl-methyl)-phenyl]-amidocarbonyl-phenyl | 1,4 | türkis |
| 17 | Sulfo | -- | 2 | 0 | 2,5-Di-(β-sulfatoethylsulfonyl-methyl)-phenyl | 2 | türkis |
| 18 | Sulfo | N-Morpholino | 1,6 | 1 | 4-N-[2',5'-Di-(β-sulfatoethylsulfonyl-methyl)-phenyl]-amidocarbonyl-phenyl | 1,4 | türkis |
| 19 | Sulfo | N,N-Bis-(β-sulfatoethyl)-amino | 2 | 2 | 4-N-[2',5'-Di-(β-sulfatoethylsulfonyl-methyl)-phenyl]-amidocarbonyl-phenyl | 1 | türkis |
| 20 | Sulfo | N-Morpholino | 2 | 1 | 3,4-Di-(β-sulfatoethylsulfonyl-methyl)-phenyl | 1 | türkis |

**Beispiel 21**

Zu einer wäßrigen Lösung von 50,9 Teilen 4-Amino-2-sulfo-2′,5′-di-(β-hydroxyethylsulfonyl-methyl)-diphenylamin gibt man bei 50 °C innerhalb von 30 Minuten unter Einhaltung eines pH-Wertes von 6 mittels etwa 5,5 Teilen Natriumcarbonat 11,1 Teile 2,3,5,6-Tetrachlor-1,4-benzochinon. Man rührt den Ansatz noch zwei Stunden bei einem pH-Wert von 6 und einer Temperatur von 50 °C nach, kühlt ihn sodann auf 20 °C ab und stellt ihn mittels wäßriger Salzsäure auf einen pH-Wert von 3,7 bis 4,0. Das ausgefallene Produkt wird abgesaugt, getrocknet und innerhalb von 30 Minuten bei 20 °C in ein Gemisch aus 125 Volumenteilen 20 %igem Oleum und 130 Volumenteilen Schwefelsäure-Monohydrat eingetragen. Man rührt den Ansatz noch etwa 2,5 Stunden zur Lösung des Produktes nach und gibt sodann innerhalb von 30 Minuten bei 22 bis 24 °C 22,8 Teile Ammoniumperoxidisulfat hinzu, rührt den Ansatz noch 90 Minuten bei 20 °C und gießt ihn auf 900 Teile Eis. Man neutralisiert mit Calciumcarbonat, saugt vom Calciumsulfat ab und isoliert den erfindungsgemäßen Triphendioxazinfarbstoff der Formel (in Form der freien Säure geschrieben)

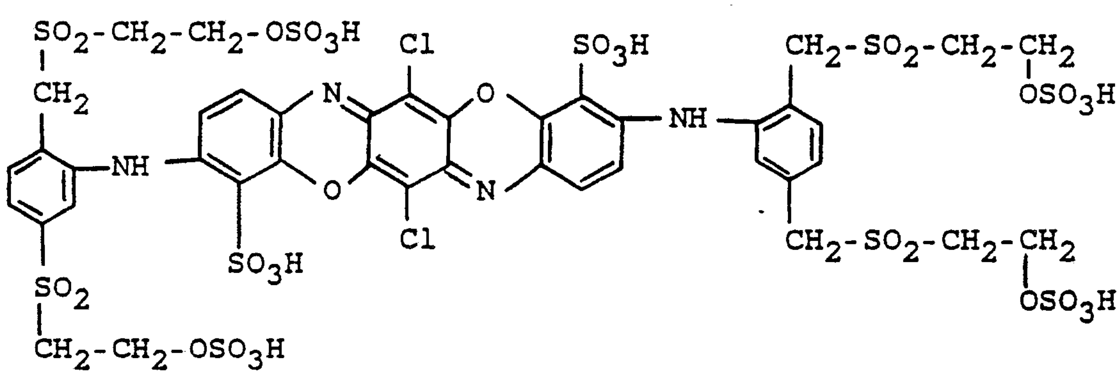

($\lambda_{max}$ = 618 nm)

durch Sprühtrocknung des Filtrats. Er besitzt sehr gute faserreaktive Eigenschaften und färbt die in der Beschreibung genannten Materialien, insbesondere Cellulosefasermaterialien, wie Baumwolle, nach den in der Technik für faserreaktive Farbstoffe üblichen Anwendungsverfahren in farbstarken, rotstichig blauen Tönen mit guten Echtheitseigenschaften.

**Beispiele 22 bis 25**

In den nachfolgenden Tabellenbeispielen sind weitere erfindungsgemäße Triphendioxazinverbindungen entsprechend der allgemeinen Formel (C)

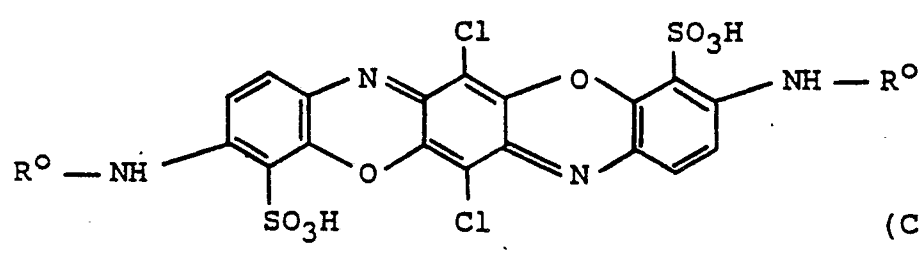

(C)

mit Hilfe des Formelrestes R° beschrieben. Sie lassen sich in erfindungsgemäßer Weise, beispielsweise gemäß den Angaben des Beispieles 21, analog den bekannten Verfahrensweisen zur Synthese von faserreaktiven Triphendioxazinfarbstoffen mit 2,3,5,6-Tetrachlor-1,4-benzochinon und der Aminoverbindung entsprechend der allgemeinen Formel (D)

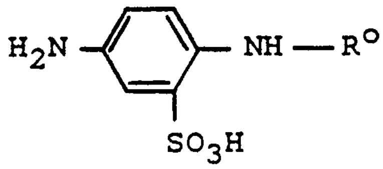

(D)

mit R° der in dem jeweiligen Tabellenbeispiel angegebenen Bedeutung als Ausgangsverbindungen herstellen. Sie besitzen ebenfalls sehr gute faserreaktive Farbstoffeigenschaften und liefern echte Färbungen auf beispielsweise Baumwolle in dem in dem jeweiligen Tabellenbeispiel angegebenen Farbton.

| Bsp. | Rest R° | Farbton |
|---|---|---|
| 22 | 3,4-Di-(β-sulfatoethylsulfonyl-methyl)-phenyl | rotstichig blau |
| 23 | 2,4-Di-(β-sulfatoethylsulfonyl-methyl)-phenyl | rotstichig blau |
| 24 | 2,4-Di-(vinylsulfonyl-methyl)-phenyl | rotstichig blau |
| 25 | 2,5-Di-(β-thiosulfatoethylsulfonyl-methyl)-phenyl | rotstichig blau |

**Beispiel A**

Synthese von 2,5-Di-(ß-sulfatoethylsulfonyl-methyl)-anilin:

a) 93,8 Teile Mercaptoethanol werden in einem Gemisch von 200 Teilen Wasser und 75 Volumenteilen einer 33%igen wäßrigen Natronlauge gelöst; die Lösung besitzt einen pH-Wert zwischen 10 und 11. Zu dieser alkalischen Lösung gibt man 87,5 Teile 1,4-Bis-(chlormethyl)-benzol und 60,6 Teile einer 33%igen wäßrigen Natronlauge; man erwärmt den Ansatz langsam auf 80° C und hält die exotherme Reaktion bei etwa 100° C und rührt sodann den Ansatz noch 30 Minuten bei 95° C nach, verdünnt ihn mit 200 Teilen Wasser und stellt sodann mit Salzsäure einen pH-Wert von 7 ein. Nach Abkühlen auf 10° C wird vom ausgefallenen Produkt abgesaugt, dieses mit kaltem Wasser nachgewaschen und bei 50° C getrocknet. Es besitzt einen Schmelzpunkt von 89-91° C.

b) 116,2 Teile der unter a) erhaltenen Verbindung 2,5-Bis-(ß-hydroxyethyl-thio-methyl)-benzol gibt man zusammen mit 1,8 Teilen Natriumwolframat-dihydrat in 200 Volumenteilen Eisessig. Man erwärmt auf 90 bis 95° C und gibt während einiger Stunden langsam 194,3 Teile einer 35%igen wäßrigen Wasserstoffperoxidlösung hinzu, rührt den Ansatz noch eine Stunde bei 100° C nach und rührt ihn sodann in ein Gemisch aus 500 Teilen Eis und 100 Teilen Kaliumchlorid ein, saugt das ausgefallene Produkt ab, wäscht es mit Wasser nach und trocknet es. Man erhält farblose Kristalle der Verbindung 2,5-Bis-(ß-hydroxyethylsulfonyl)-benzol mit einem Schmelzpunkt von 209-212° C.

c) In eine Mischung aus 180 Volumenteilen Schwefelsäuremonohydrat und 18 Volumenteilen 65%igem Oleum gibt man bei einer Temperatur von maximal 40° C 162 Teile der unter b) erhaltenen Verbindung. Sodann gibt man bei 30 bis 38° C langsam 90,8 Teile einer Nitriersäure, bestehend zu 30 % aus Salpetersäure und 70 % Schwefelsäure, rührt anschließend den Reaktionsansatz noch 4 bis 5 Stunden bei 70° C nach und rührt ihn dann in 2000 Teile Eiswasser ein. Zur Hydrolyse der Schwefelsäureestergruppe wird die saure Lösung unter Rückfluß etwa 3 Stunden gekocht.
Man kühlt den Ansatz anschließend ab, filtriert die ausgefallene Verbindung 2,5-Di-(ß-hydroxyethylsulfonyl-methyl)-nitrobenzol ab und trocknet sie. Sie besitzt einen Schmelzpunkt von 125-126,5° C.

d) 128,6 Teile der unter c) erhaltenen Nitroverbindung werden in 500 Teilen Wasser bei 60° C und einem pH-Wert von 6,5 gelöst und im Autoklaven bei 80° C und einem Wasserstoffdruck von 50 bar in Gegenwart von 50 Teilen Raney-Nickel hydriert. Danach wird der Ansatz mit 1500 Teilen heißem Wasser verdünnt und bei 95° C vom Katalysator abfiltriert. Nach Abkühlen unterhalb 10° C fällt das 2,5-Di-(ß-sulfatoethylsulfonyl-methyl)-anilin aus. Es besitzt einen Schmelzpunkt von 201° C.

e) 84,3 Teile der unter d) erhaltenen Anilinverbindung gibt man innerhalb von 30 Minuten bei einer Temperatur von maximal 20° C in eine Mischung aus 200 Teilen Schwefelsäuremonohydrat und 125 Teilen 20%igem Oleum. Man rührt den Ansatz noch etwa 4 Stunden nach und rührt ihn dann in 1000 Teile Eis ein. Überschüssige Schwefelsäure wird mittels Schlämmkreide neutralisiert. Das ausgefallene Calciumsulfat wird

abgesaugt und mit Wasser nachgewaschen und die vereinigten Filtrate bei 50 °C zur Trockne eingedampft. Man erhält das 2,5-Di-(ß-sulfatoethylsulfonyl-methyl)-anilin mit einem Schmelzpunkt von oberhalb 360 °C.

f) Die unter e) erhaltene ß-Sulfatoethylsulfonyl-Verbindung kann in deren Vinylsulfonyl-Derivat übergeführt werden, das auch zur besseren Charakterisierung der Struktur des Sulfato-Derivates dienen kann. Zur Überführung der ß-Sulfatoethylsulfonyl-Verbindung in die Vinylsulfonyl-Verbindung gibt man 30 Teile des unter e) erhaltenen salzhaltigen Produktes in 250 Teile Wasser, stellt mittels wäßriger Natronlauge einen pH-Wert zwischen 10 und 11 ein und hält ihn während einer Stunde bei 40 bis 45 °C. Das entstandene 2,5-(Vinylsulfonylmethyl)-anilin fällt aus, wird abgesaugt, salzfrei gewaschen und getrocknet.

Die Vinylsulfonyl-Verbindung zeigt folgende $^1$H-NMR-Daten (in $d_6$-Dimethylsulfoxid; bei 300 MHz): δ (in ppm): 7,02 (d, 1H); 6,91 (m,2H); 6,65 (d,1,H); 6,52 (dd,1H); 6,16 (dd,2H); 6,12 (dd,2H); 5,29 (s,2H); 4,14 (s,2H); 4,32 (s,2H).

## Ansprüche

1. Ein Farbstoff entsprechend der allgemeinen Formel (1)

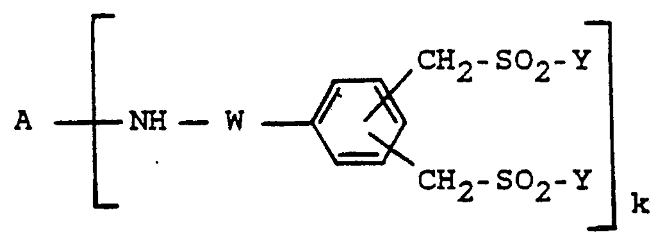

(1)

in welcher bedeuten:
A ist der Rest eines Anthrachinon-, Phthalocyanin-, Formazan-, Azomethin-, Dioxazin-, Phenazin-, Triphenylmethan-, Xanthen-, Thioxanthon-, Nitroaryl-, Naphthochinon-, Pyrenchinon- oder Perylentetracarbimid-Farbstoffes;
W ist eine direkte Bindung oder eine Gruppe der allgemeinen Formel (2)

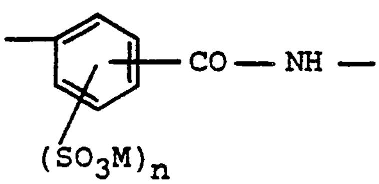

(2)

in welcher
M ein Wasserstoffatom oder ein Alkalimetall ist und
n für die Zahl Null, 1 oder 2 steht (wobei diese Gruppe im Falle von n gleich Null ein Wasserstoffatom bedeutet);
Y ist die Vinylgruppe oder ist eine Ethylgruppe, die in ß-Stellung durch einen Substituenten substituiert ist, der mittels Alkali unter Bildung der Vinylgruppe eliminierbar ist;
k ist die Zahl 1 oder 2.

2. Farbstoff nach Anspruch 1, dadurch gekennzeichnet, daß A der Rest eines Anthrachinon-, Phthalocyanin-, Triphendioxazin- oder Formazanfarbstoffes ist.

3. Farbstoff nach Anspruch 1 oder 2, dadurch gekennzeichnet, daß W eine direkte Bindung ist.

4. Anthrachinonfarbstoff nach Anspruch 1 entsprechend der allgemeinen Formel (4)

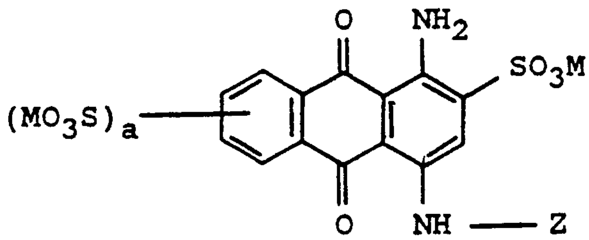

(4)

in welcher
M ein Wasserstoffatom oder ein Alkalimetall ist,
a die Zahl Null oder 1 bedeutet und
Z eine Gruppe der allgemeinen Formel (3)

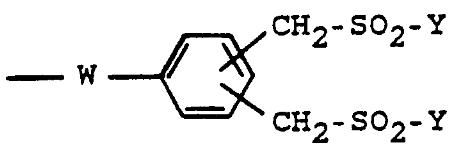

(3)

ist, in welcher W und Y die in Anspruch 1 genannten Bedeutungen haben.

5. Phthalocyaninfarbstoff nach Anspruch 1 entsprechend der allgemeinen Formel (5)

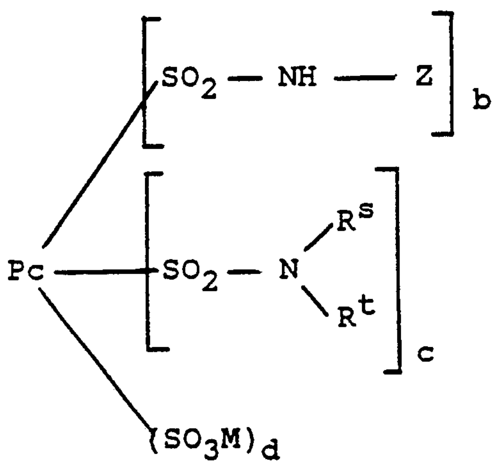

(5)

in welcher bedeuten
M ist ein Wasserstoffatom oder ein Alkalimetall;
Pc ist der Rest des Kupfer- oder Nickelphthalocyanins, wobei der Phthalocyaninrest noch in den 3- und/oder 4-Stellungen der carbocyclischen aromatischen Ringe des Phthalocyanins durch Halogenatome oder Phenylreste substituiert sein kann und in welchem die Sulfonamid-und/oder Sulfogruppen in den 3- und/oder 4-Stellungen der carbocyclischen aromatischen Ringe des Phthalocyanins gebunden sind;
$R^s$ ist ein Wasserstoffatom oder eine Alkylgruppe von 1 bis 4 C-Atomen, die durch Sulfo, Carboxy, Phosphato, Hydroxy, Sulfato, Phenyl, Sulfophenyl, ß-Sulfatoethylsulfonyl oder 3- oder 4-(ß-Sulfatoethylsulfonyl)-phenyl substituiert sein kann;
$R^t$ ist ein Wasserstoffatom oder eine Alkylgruppe von 1 bis 4 C-Atomen, die durch Sulfo, Carboxy, Phosphato, Hydroxy, Sulfato, Phenyl, Sulfophenyl, ß-Sulfatoethylsulfonyl oder 3- oder 4-(ß-Sulfatoethylsulfonyl)-phenyl substituiert sein kann, oder ist ein Phenylrest, der durch 1 oder 2 Substituenten aus der Gruppe Methyl, Ethyl, Methoxy, Ethoxy, Chlor, Sulfo, Carboxy und ß-Sulfatoethylsulfonyl substituiert sein kann;
b ist eine ganze oder gebrochene Zahl von 1 bis 2,
c ist eine ganze oder gebrochene Zahl von Null bis 2,
d ist eine ganze oder gebrochene Zahl von Null bis 3,
wobei die Summe von (b + c + d) eine ganze oder gebrochene Zahl von 3 bis 4 ist;
Z ist eine Gruppe der allgemeinen Formel (3)

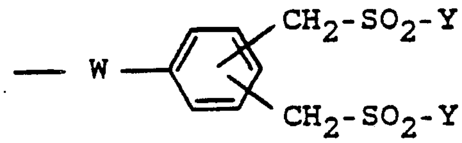

(3)

in welcher W und Y die in Anspruch 1 genannten Bedeutungen haben.

6. Triphendioxazinfarbstoff entsprechend der allgemeinen Formel (6)

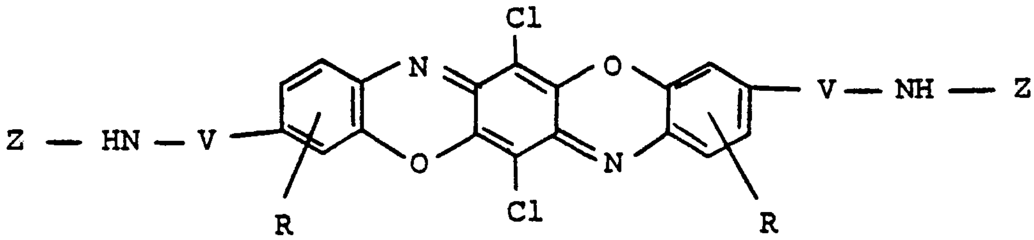

(6)

in welcher bedeuten:

V ist eine direkte Bindung oder eine Gruppe entsprechend der allgemeinen Formel -NH-E- , in welcher E einen Phenylenrest bedeutet, der durch 1 oder 2 Substituenten aus der Gruppe Alkyl von 1 bis 4 C-Atomen, Alkoxy von 1 bis 4 C-Atomen, Halogen, Carboxy und Sulfo substituiert sein kann, oder eine Alkylengruppe von 2 bis 6 C-Atomen ist;

R ist ein Wasserstoffatom oder eine Alkylgruppe von 1 bis 4 C-Atomen, eine Alkoxygruppe von 1 bis 4 C-Atomen, die Acetylamino-, Nitro- oder Carboxygruppe oder ein Halogenatom oder eine Sulfogruppe;

Z ist eine Gruppe der allgemeinen Formel (3)

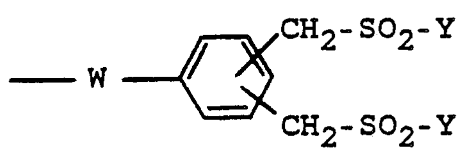

(3)

in welcher W und Y die in Anspruch 1 genannten Bedeutungen haben.

7. Kupferkomplex-Formazan-Farbstoff entsprechend der allgemeinen Formel (7)

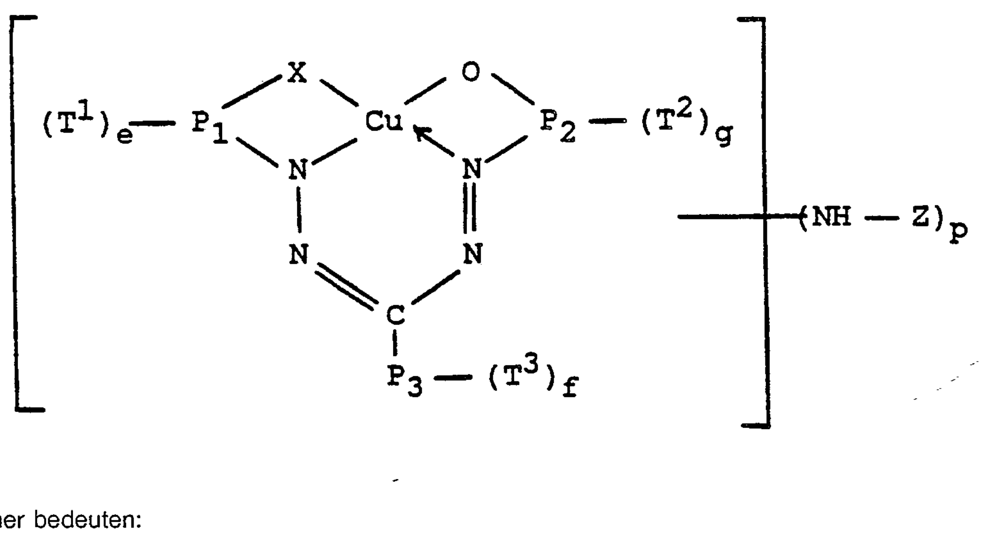

(7)

in welcher bedeuten:

X ist ein Sauerstoffatom oder die Carbonyloxygruppe;

$P_1$ und $P_2$ bedeuten, unabhängig voneinander, einen Benzol-oder Naphthalinring, wobei $P_1$ das Stickstoffatom und die Gruppe X ortho-ständig zueinander und $P_2$ das Sauerstoffatom und das Stickstoffatom ortho-ständig zueinander gebunden enthalten und die Benzolkerne bzw. Naphthalinkerne noch durch einen oder

zwei Substituenten aus der Gruppe Halogen, Nitro, Alkyl von 1 bis 4 C-Atomen, Alkoxy von 1 bis 4 C-Atomen, Sulfamoyl, durch Alkyl von 1 bis 4 C-Atomen mono-oder disubstituiertes Sulfamoyl, Alkylsulfonyl von 1 bis 4 C-Atomen und Phenylsulfonyl substituiert sein können;

$P_3$ ist eine geradkettige oder verzweigte Alkylengruppe von 2 bis 6 C-Atomen, die durch eine Sulfophenylgruppe substituiert sein kann, oder ist eine Phenylengruppe oder eine Naphthylengruppe, die durch 1 oder 2 Substituenten aus der Gruppe Methyl, Ethyl, Methoxy, Ethoxy und Chlor substituiert sein können;

$T^1$, $T^2$ und $T^3$ bedeuten, unabhängig voneinander, eine Sulfo- oder Carboxygruppe, bevorzugt Sulfogruppe;

e, f und g stellen, unabhängig voneinander, die Zahl Null, 1 oder 2 dar, wobei die Summe von (e+f+g) eine ganze Zahl von 1 bis 4 bedeutet und vorzugsweise 2 oder 3 ist, wobei im Falle von e oder f oder g gleich Null die Gruppe $T^1$ bzw. $T^2$ bzw. $T^3$ ein Wasserstoffatom bedeutet;

p steht für die Zahl 1 oder 2, bevorzugt 1, wobei die Gruppe -NH-Z an einen aromatischen Rest von $P_1$, $P_2$ oder $P_3$ gebunden sein kann und bevorzugt an $P_2$ gebunden ist;

Z ist eine Gruppe der allgemeinen Formel (3)

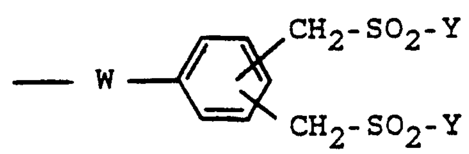

(3)

in welcher W und Y die in Anspruch 1 genannten Bedeutungen haben.

8. Verbindung nach mindestens einem der Ansprüche 1 bis 7, dadurch gekennzeichnet, daß Y jeweils für eine ß-Sulfatoethyl-, ß-Chlorethyl- oder Vinylgruppe steht.

9. Verbindung nach mindestens einem der Ansprüche 1 bis 7, dadurch gekennzeichnet, daß beide Y für eine ß-Sulfatoethyl-Gruppe stehen.

10. Verfahren zur Herstellung eines Farbstoffes der allgemeinen Formel (1), dadurch gekennzeichnet, daß man eine Verbindung der allgemeinen Formel (8)

$A\text{-}(Hal)_m$   (8)

in welcher A die in Anspruch 1 genannte Bedeutung besitzt und Hal für ein Halogenatom steht, wobei Hal auch über eine Sulfonylgruppe an A gebunden sein kann, und m eine Zahl von 1 bis 4 bedeutet, mit der 1- bis 2-fach molaren Menge einer Aminoverbindung der allgemeinen Formel (9)

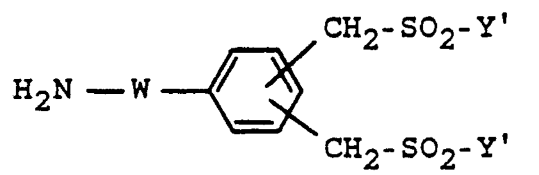

(9)

in welcher W die in Anspruch 1 genannte Bedeutung besitzt und Y′ eine der Bedeutungen von Y hat oder die ß-Hydroxyethyl-Gruppe ist, umsetzt und im Falle, daß man von einer Verbindung der allgemeinen Formel (9) mit Y′ gleich ß-Hydroxyethyl-Gruppen ausgeht, die erhaltene Verbindung entsprechend der allgemeinen Formel (1), in welcher jedoch die beiden Y hier ß-Hydroxyethyl-Gruppen bedeuten, in die Schwefelsäurehalbester-Verbindung der allgmeinen Formel (1) mit Y den ß-Sulfatoethyl-Gruppen überführt und gegebenenfalls, sofern in der Ausgangsverbindung der Formel (9) W für eine Gruppe der allgemeinen Formel (2) mit n gleich 1 oder 2 steht, gleichzeitig oder anschließend eine oder zwei Sulfogruppen unter Herstellung des Farbstoffes (1) mit einer Gruppe der Formel (2) mit n gleich 1 oder 2 einführt,

oder daß man für einen bestimmten Farbstoff übliche Farbstoffvorprodukte, von denen mindestens eines einen Rest der allgemeinen Formel (3A)

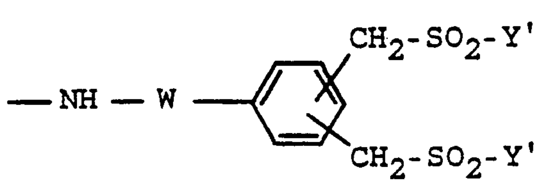

(3A)

in welcher Y′ und W die obengenannten Bedeutungen haben, enthält, miteinander umsetzt und im Falle von

Y′ gleich ß-Hydroxyethyl das erhaltene Produkt anschließend verestert, vorzugsweise sulfatisiert.

11. Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

12. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

Patentansprüche für folgenden Vertragsstaat: ES

1. Verfahren zur Herstellung eines Farbstoffes entsprechend der allgemeinen Formel (1)

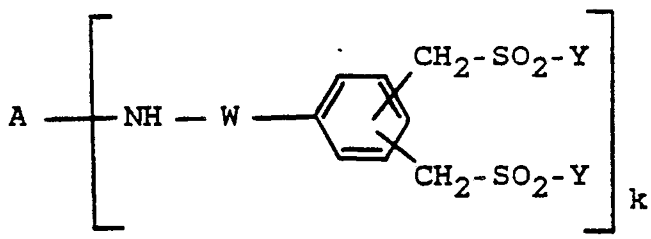

(1)

in welcher bedeuten:

A ist der Rest eines Anthrachinon-, Phthalocyanin-, Formazan-, Azomethin-, Dioxazin-, Phenazin-, Triphenylmethan-, Xanthen-, Thioxanthon-, Nitroaryl-, Naphthochinon-, Pyrenchinon- oder Perylentetracarbimid-Farbstoffes;

W ist eine direkte Bindung oder eine Gruppe der allgemeinen Formel (2)

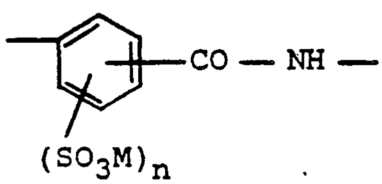

(2)

in welcher

M ein Wasserstoffatom oder ein Alkalimetall ist und

n für die Zahl Null, 1 oder 2 steht (wobei diese Gruppe im Falle von n gleich Null ein Wasserstoffatom bedeutet);

Y ist die Vinylgruppe oder ist eine Ethylgruppe, die in ß-Stellung durch einen Substituenten substituiert ist, der mittels Alkali unter Bildung der Vinylgruppe eliminierbar ist;

k ist die Zahl 1 oder 2,

dadurch gekennzeichnet, daß man eine Verbindung der allgemeinen Formel (8)

$A\text{-}(Hal)_m$ (8)

in welcher A die obengenannte Bedeutung besitzt und Hal für ein Halogenatom steht, wobei Hal auch über eine Sulfonylgruppe an A gebunden sein kann, und m eine Zahl von 1 bis 4 bedeutet, mit der 1- bis 2-fach molaren Menge einer Aminoverbindung der allgemeinen Formel (9)

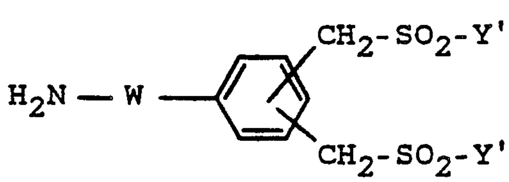

(9)

in welcher W die obengenannte Bedeutung besitzt und Y′ eine der Bedeutungen von Y hat oder die ß-Hydroxyethyl-Gruppe ist, umsetzt und im Falle, daß man von einer Verbindung der allgemeinen Formel (9)

mit Y′ gleich ß-Hydroxyethyl-Gruppen ausgeht, die erhaltene Verbindung entsprechend der allgemeinen Formel (1), in welcher jedoch die beiden Y hier ß-Hydroxyethyl-Gruppen bedeuten, in die Schwefelsäurehalbester-Verbindung der allgmeinen Formel (1) mit Y den ß-Sulfatoethyl-Gruppen überführt und gegebenenfalls, sofern in der Ausgangsverbindung der Formel (9) W für eine Gruppe der allgemeinen Formel (2) mit n gleich 1 oder 2 steht, gleichzeitig oder anschließend eine oder zwei Sulfogruppen unter Herstellung des Farbstoffes (1) mit einer Gruppe der Formel (2) mit n gleich 1 oder 2 einführt,
oder daß man für einen bestimmten Farbstoff übliche Farbstoffvorprodukte, von denen mindestens eines einen Rest der allgemeinen Formel (3A)

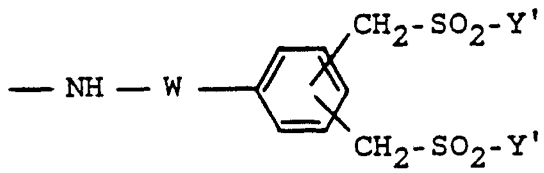
(3A)

in welcher Y′ und W die obengenannten Bedeutungen haben, enthält, miteinander umsetzt und im Falle von Y′ gleich ß-Hydroxyethyl das erhaltene Produkt anschließend verestert, vorzugsweise sulfatisiert.

2. Verfahren nach Anspruch 1, dadurch gekennzeichnet, daß A der Rest eines Anthrachinon-, Phthalocyanin-, Triphendioxazin- oder Formazanfarbstoffes ist.

3. Verfahren nach Anspruch 1 oder 2, dadurch gekennzeichnet, daß W eine direkte Bindung ist.

4. Verfahren nach Anspruch 1, dadurch gekennzeichnet, daß der Farbstoff der Formel (1) ein Anthrachinonfarbstoff entsprechend der allgemeinen Formel (4)

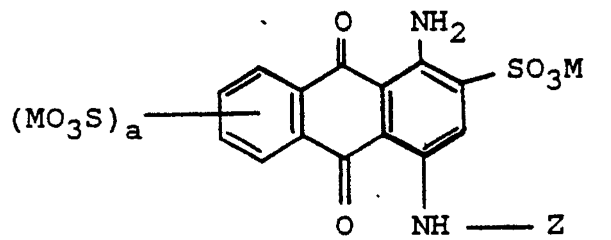
(4)

ist, in welcher
M ein Wasserstoffatom oder ein Alkalimetall ist,
a die Zahl Null oder 1 bedeutet und
Z eine Gruppe der allgemeinen Formel (3)

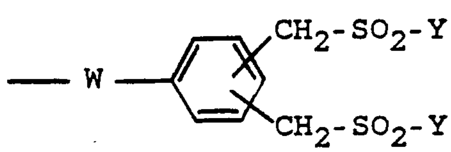
(3)

ist, in welcher W und Y die in Anspruch 1 genannten Bedeutungen haben.

5. Verfahren nach Anspruch 1, dadurch gekennzeichnet, daß der Farbstoff der Formel (1) ein Phthalocyaninfarbstoff entsprechend der allgemeinen Formel (5)

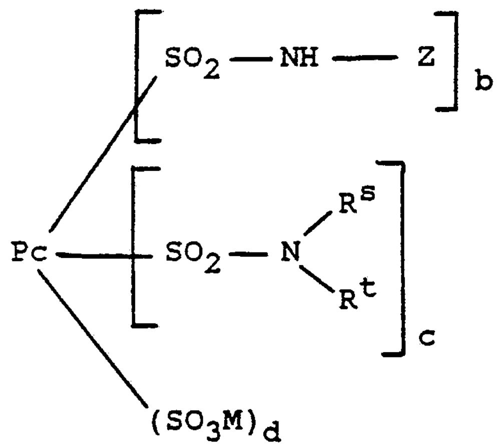

(5)

ist, in welcher bedeuten:

M ist ein Wasserstoffatom oder ein Alkalimetall;

Pc ist der Rest des Kupfer- oder Nickelphthalocyanins, wobei der Phthalocyaninrest noch in den 3- und/oder 4-Stellungen der carbocyclischen aromatischen Ringe des Phthalocyanins durch Halogenatome oder Phenylreste substituiert sein kann und in welchem die Sulfonamid-und/oder Sulfogruppen in den 3- und/oder 4-Stellungen der carbocyclischen aromatischen Ringe des Phthalocyanins gebunden sind;

$R^s$ ist ein Wasserstoffatom oder eine Alkylgruppe von 1 bis 4 C-Atomen, die durch Sulfo, Carboxy, Phosphato, Hydroxy, Sulfato, Phenyl, Sulfophenyl, ß-Sulfatoethylsulfonyl oder 3- oder 4-(ß-Sulfatoethylsulfonyl)-phenyl substituiert sein kann;

$R^t$ ist ein Wasserstoffatom oder eine Alkylgruppe von 1 bis 4 C-Atomen, die durch Sulfo, Carboxy, Phosphato, Hydroxy, Sulfato, Phenyl, Sulfophenyl, ß-Sulfatoethylsulfonyl oder 3- oder 4-(ß-Sulfatoethylsulfonyl)-phenyl substituiert sein kann, oder ist ein Phenylrest, der durch 1 oder 2 Substituenten aus der Gruppe Methyl, Ethyl, Methoxy, Ethoxy, Chlor, Sulfo, Carboxy und ß-Sulfatoethylsulfonyl substituiert sein kann;

b ist eine ganze oder gebrochene Zahl von 1 bis 2,

c ist eine ganze oder gebrochene Zahl von Null bis 2,

d ist eine ganze oder gebrochene Zahl von Null bis 3,

wobei die Summe von (b + c + d) eine ganze oder gebrochene Zahl von 3 bis 4 ist;

Z ist eine Gruppe der allgemeinen Formel (3)

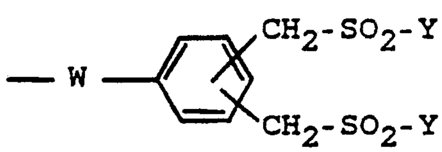

(3)

in welcher W und Y die in Anspruch 1 genannten Bedeutungen haben.

6. Verfahren nach Anspruch 1, dadurch gekennzeichnet, daß der Farbstoff der Formel (1) ein Triphendioxazinfarbstoff der allgemeinen Formel (6)

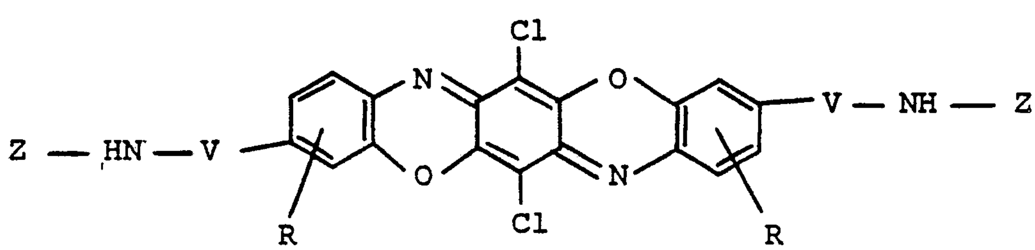

(6)

ist, in welcher bedeuten:

V ist eine direkte Bindung oder eine Gruppe entsprechend der allgemeinen Formel -NH-E- , in welcher E einen Phenylenrest bedeutet, der durch 1 oder 2 Substituenten aus der Gruppe Alkyl von 1 bis 4 C-Atomen,

Alkoxy von 1 bis 4 C-Atomen, Halogen, Carboxy und Sulfo substituiert sein kann, oder eine Alkylengruppe von 2 bis 6 C-Atomen ist;
R ist ein Wasserstoffatom oder eine Alkylgruppe von 1 bis 4 C-Atomen, eine Alkoxygruppe von 1 bis 4 C-Atomen, die Acetylamino-, Nitro- oder Carboxygruppe oder ein Halogenatom oder eine Sulfogruppe;
Z ist eine Gruppe der allgemeinen Formel (3)

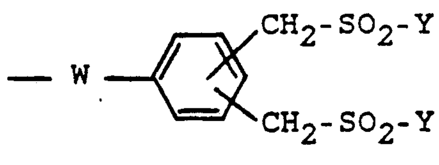
(3)

in welcher W und Y die in Anspruch 1 genannten Bedeutungen haben.

7. Verfahren nach Anspruch 1, dadurch gekennzeichnet, daß der Farbstoff der Formel (1) ein Kupferkomplex-Formazan-Farbstoff der allgemeinen Formel (7)

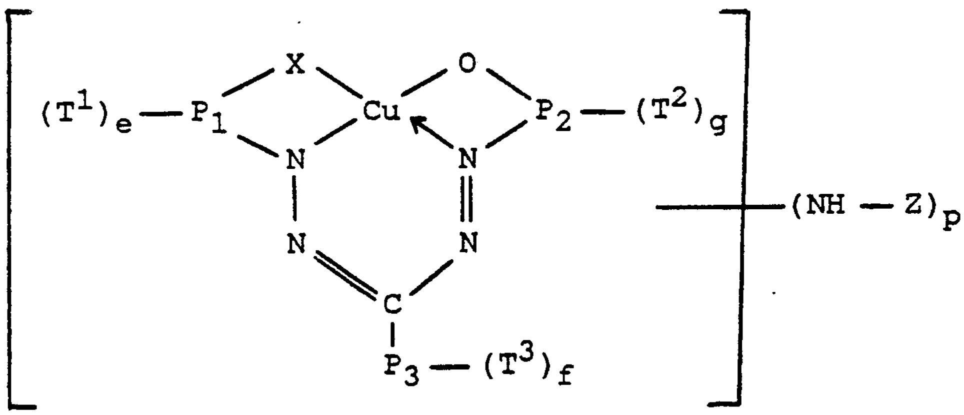
(7)

in welcher bedeuten:
X ist ein Sauerstoffatom oder die Carbonyloxygruppe;
$P_1$ und $P_2$ bedeuten, unabhängig voneinander, einen Benzol-oder Naphthalinring, wobei $P_1$ das Stickstoffatom und die Gruppe X ortho-ständig zueinander und $P_2$ das Sauerstoffatom und das Stickstoffatom ortho-ständig zueinander gebunden enthalten und die Benzolkerne bzw. Naphthalinkerne noch durch einen oder zwei Substituenten aus der Gruppe Halogen, Nitro, Alkyl von 1 bis 4 C-Atomen, Alkoxy von 1 bis 4 C-Atomen, Sulfamoyl, durch Alkyl von 1 bis 4 C-Atomen mono-oder disubstituiertes Sulfamoyl, Alkylsulfonyl von 1 bis 4 C-Atomen und Phenylsulfonyl substituiert sein können;
$P_3$ ist eine geradkettige oder verzweigte Alkylengruppe von 2 bis 6 C-Atomen, die durch eine Sulfophenylgruppe substituiert sein kann, oder ist eine Phenylengruppe oder eine Naphthylengruppe, die durch 1 oder 2 Substituenten aus der Gruppe Methyl, Ethyl, Methoxy, Ethoxy und Chlor substituiert sein können;
$T^1$, $T^2$ und $T^3$ bedeuten, unabhängig voneinander, eine Sulfo- oder Carboxygruppe, bevorzugt Sulfogruppe;
e, f und g stellen, unabhängig voneinander, die Zahl Null, 1 oder 2 dar, wobei die Summe von (e+f+g) eine ganze Zahl von 1 bis 4 bedeutet und vorzugsweise 2 oder 3 ist, wobei im Falle von e oder f oder g gleich Null die Gruppe $T^1$ bzw. $T^2$ bzw. $T^3$ ein Wasserstoffatom bedeutet;
p steht für die Zahl 1 oder 2, bevorzugt 1, wobei die Gruppe -NH-Z an einen aromatischen Rest von $P_1$, $P_2$ oder $P_3$ gebunden sein kann und bevorzugt an $P_2$ gebunden ist;
Z ist eine Gruppe der allgemeinen Formel (3)

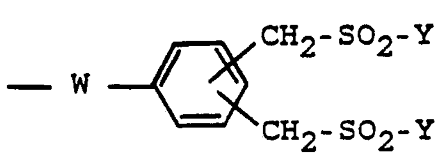
(3)

in welcher W und Y die in Anspruch 1 genannten Bedeutungen haben.

8. Verfahren nach mindestens einem der Ansprüche 1 bis 7, dadurch gekennzeichnet, daß Y jeweils für eine ß-Sulfatoethyl-, ß-Chlorethyl- oder Vinylgruppe steht.

9. Verfahren nach mindestens einem der Ansprüche 1 bis 7, dadurch gekennzeichnet, daß beide Y für eine ß-Sulfatoethyl-Gruppe stehen.

10. Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

11. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

Europäisches Patentamt

# EUROPÄISCHER RECHERCHENBERICHT

Nummer der Anmeldung

EP 90 10 3791

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A- 931 596 (GENERAL ANILINE)<br>* Ansprüche *<br>--- | 1,2,3,5,8-12 | C 09 B 62/503<br>D 06 P 1/384 |
| A | DE-A-1 955 849 (HOECHST)<br>* Ansprüche 1,2; Seite 16, Verbindung 13 *<br>--- | 1,3,8-12 | |
| A | US-A-3 277 075 (MAYHEW et al.)<br>* Anspruch 1 *<br>----- | 1-4,6,10-12 | |
| | | | RECHERCHIERTE SACHGEBIETE (Int. Cl.5) |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 25-04-1990 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur

T : der Erfindung zugrunde liegende Theorien oder Grundsatze
E : alteres Patentdokument, das jedoch erst am oder nach dem Anmeldedatum veroffentlicht worden ist
D : in der Anmeldung angeführtes Dokument
L : aus andern Grunden angeführtes Dokument

& : Mitglied der gleichen Patentfamilie, übereinstimmendes Dokument